# EUROPEAN PATENT SPECIFICATION

(11) **EP 3 989 612 B1**
(45) Date of publication and mention of the grant of the patent: **07.01.2026**
(21) Application number: 20826178.4
(22) Date of filing: 19.06.2020
(51) Int. Cl.: H04W 4/80, H04W 76/14, H04W 88/02, H04W 84/18

(54) **BLUETOOTH COMMUNICATION CONNECTION METHOD AND ELECTRONIC DEVICE THEREOF**
VERFAHREN UND ELEKTRONISCHE VORRICHTUNG FÜR DIE BLUETOOTH-KOMMUNIKATIONSVERBINDUNG
PROCÉDÉ DE CONNEXION DE COMMUNICATION BLUETOOTH ET DISPOSITIF ÉLECTRONIQUE ASSOCIÉ

(30) Priority: 19.06.2019 KR 20190072802
(43) Date of publication of application: 27.04.2022
(73) Proprietor: Samsung Electronics Co., Ltd., Suwon-si, Gyeonggi-do 16677 (KR)
(72) Inventor: LEE, Sangyoun, Suwon-si, Gyeonggi-do 16677 (KR)
(74) Representative: Arnold & Siedsma
(86) International application number: PCT/KR2020/008012
(87) International publication number: WO 2020/256497

(56) References cited:
- WO-A1-2017/030232
- KR-A- 20170 016 693
- KR-A- 20190 061 438
- KR-B1- 101 579 871
- US-A1- 2017 026 777
- US-A1- 2017 026 777
- US-A1- 2018 249 310
- US-A1- 2020 053 831
- BLUETOOTH SIG: "Core System Package [Low Energy Controller volume] Specification of the Bluetooth System. Specification Volume 6", COVERED CORE PACKAGE VERSION: 5.0, 1 June 2016 (2016-06-01), XP055750619, Retrieved from the Internet <URL:https://inst.eecs.berkeley.edu/~ee290c/sp18/note/BLE_Vol6.pdf> [retrieved on 20201116]

## Description

### Technical Field

Various embodiments of the disclosure relate to a method of establishing a Bluetooth communication connection and an electronic device thereof.

### Background Art

Recently, with the great interest in a technology using a low-cost, low-power wireless device or wireless link in a technical field related to wireless communication, a short-range communication technology has been widely used. A Bluetooth communication technique, which is one of the short-range communication technologies, operates in a frequency band of 2.4GHz or 5GHz, and can transmit/receive data within a specific distance (e.g., 10m).

### Disclosure of Invention

### Technical Problem

Bluetooth communication between electronic devices may be affected by situations of the electronic devices. For example, when an obstacle is located between the electronic devices or when a plurality of electronic devices which provide a wireless communication function are present around the electronic devices, a Bluetooth communication connection may be delayed. Accordingly, a user of the electronic device may experience inconvenience when using a Bluetooth communication-based service. Accordingly, in a situation in which the Bluetooth communication connection may be delayed, a solution for reducing a time required for the Bluetooth communication connection may be necessary.

Document US2018/249310 Al discloses a process for Bluetooth device discovery between two devices.

### Summary of invention

The invention is defined by the appended set of claims.

Various embodiments of the disclosure may provide a method of reducing a time required for a Bluetooth communication connection and an electronic device thereof, in a situation in which the Bluetooth communication connection may be delayed.

Technical problems to be achieved in the disclosure are not limited to the technical problems mentioned above, and other technical problems not mentioned herein can be clearly understood by those skilled in the art to which the disclosure pertains from the following descriptions.

### Solution to Problem

An electronic device according to various embodiments may include a communication circuit, a processor electrically connected to the communication circuit, and a memory electrically connected to the processor. The memory may store instructions, when executed, causing the processor to transmit a first advertising packet of a first type, having a first period, via the communication circuit, determine a situation of an external electronic device by identifying scan address information included in an additional information request signal in response to reception of the additional information request signal from the external electronic device which has received the first advertising packet, transmit a second advertising packet of a second type, having a second period faster than the first period, via the communication circuit, based on the situation of the external electronic device, and establish a Bluetooth communication connection with the external electronic device in response to reception of a connection request signal.

An external electronic device according to various embodiments may include a communication circuit, a processor electrically connected to the communication circuit, and a memory electrically connected to the processor. The memory may store instructions, when executed, causing the processor to obtain situation information of the external electronic device, in response to reception of a first advertising packet of a first type, having a first period and transmitted from an electronic device, determine a situation of the external electronic device, based on the situation information of the external electronic device, transmit an additional information request signal including scan address information associated with the situation of the external electronic device to the electronic device via the communication circuit, transmit a connection request signal to the electronic device via the communication circuit, in response to reception of a second advertising packet of a second type, having a second period faster than the first period, and establish a Bluetooth communication connection with the electronic device.

An electronic device according to various embodiments may include a communication circuit, a processor electrically connected to the communication circuit, and a memory electrically connected to the processor. The memory may store instructions, when executed, causing the processor to transmit a first advertising packet of a first type, having a first period, via the communication circuit, obtain situation information of the electronic device while transmitting the first advertising packet of the first type, having the first period, transmit a second advertising packet of a second type, having a second period faster than the first period, via the communication circuit, based on the situation information, and establish a Bluetooth communication connection with the external electronic device in response to reception of a connection request signal.

An external electronic device according to various embodiments may include a communication circuit, a processor electrically connected to the communication circuit, and a memory electrically connected to the processor. The memory may store instructions, when executed, causing the processor to receive a first advertising packet of a first type, having a first period and transmitted from an electronic device, transmit an additional information request signal to the electronic device via the communication circuit in response to reception of a second advertising packet of a second type, having a second period faster than the first period, and establish a Bluetooth communication connection with the electronic device.

### Advantageous Effects of Invention

An electronic device and a method thereof according to various embodiments of the disclosure can reduce a time required for a Bluetooth communication connection in a situation in which the Bluetooth communication connection may be delayed, thereby providing a Bluetooth communication-based service to a user in a situation in which the Bluetooth communication connection may be delayed.

### Brief Description of Drawings

FIG. 1 is a block diagram of an electronic device in a network environment according to various embodiments;
FIG. 2 is a block diagram of an electronic device according to various embodiments;
FIG. 3 is a flowchart illustrating an example of a method of establishing a Bluetooth communication connection in an electronic device according to various embodiments;
FIG. 4A is an exemplary view illustrating a situation in which a Bluetooth communication connection between an electronic device and an external electronic device is delayed according to various embodiments;
FIG. 4B is an exemplary view illustrating a situation in which a Bluetooth communication connection between an electronic device and an external electronic device is delayed according to various embodiments;
FIG. 5 is a flowchart illustrating a method of transmitting a second advertising packet of a second type, having a second period, in an electronic device according to various embodiments;
FIG. 6 is a flowchart illustrating an example of a method of establishing a Bluetooth communication connection in an external electronic device according to various embodiments;
FIG. 7 is a flowchart illustrating a method of transmitting an additional information request signal including situation information in an external electronic device according to various embodiments;
FIG. 8 illustrates another example of a method of establishing a Bluetooth communication connection between an electronic device and an external electronic device according to various embodiments;
FIG. 9 is a flowchart illustrating another example of a method of establishing a Bluetooth communication connection in an electronic device according to various embodiments;
FIG. 10 is a flowchart illustrating a method of transmitting a second advertising packet having a second period in an electronic device according to various embodiments;
FIG. 11 is a flowchart illustrating another example of a method of establishing a Bluetooth communication connection in an external electronic device according to various embodiments;
FIG. 12 illustrates another example of a method of establishing a Bluetooth communication connection between an electronic device and an external electronic device according to various embodiments;
FIG. 13 is a flowchart illustrating another example of a method of establishing a Bluetooth communication connection in an electronic device according to various embodiments;
FIG. 14 is a flowchart illustrating another example of a method of establishing a Bluetooth communication connection in an external electronic device according to various embodiments; and
FIG. 15 illustrates another example of a method of establishing a Bluetooth communication connection between an electronic device and an external electronic device according to various embodiments.

### Best Mode for Carrying out the Invention

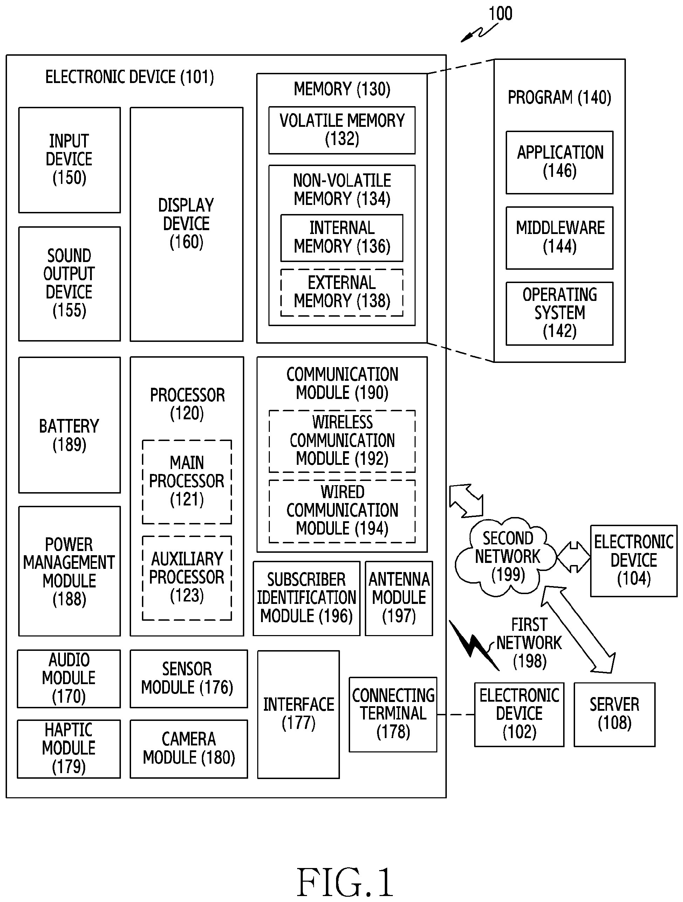

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive a command or data to be used by other component (e.g., the processor 120) of the electronic device 101, from the outside (e.g., a user) of the electronic device 101. The input device 150 may include, for example, a microphone, a mouse, a keyboard, or a digital pen (e.g., a stylus pen).

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., PCB). According to an embodiment, the antenna module 197 may include a plurality of antennas. In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

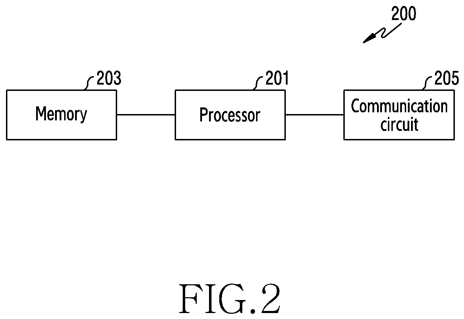

FIG. 2 is a block diagram of an electronic device according to various embodiments.

Referring to FIG. 2, an electronic device 200 (e.g., the electronic device 101 or 102 of FIG. 1) may include at least one of a processor 201 (e.g., the processor 120 of FIG. 1), a memory 203 (e.g., the memory 130 of FIG. 1), and a communication circuit 205 (e.g., the communication module 190 of FIG. 1). However, the disclosure is not limited thereto. For example, the electronic device 200 may further include a display (e.g., the display device 160 of FIG. 1) and/or an input/output interface (e.g., the input device 150 or interface 177 of FIG. 1).

The processor 201 may provide overall control to the electronic device 200. The processor 201 may be operatively coupled to different components in the electronic device 200, such as the memory 203 and the communication circuit 205, to provide overall control to the electronic device 200.

The processor 201 may receive instructions of the different components and interpret the received instructions, and may perform calculation or data processing according to the interpreted instructions.

The processor 201 may process a signal or data generated inside the electronic device 200. For example, the processor 201 may request the memory 203 to provide an instruction, data, or a signal. The processor 201 may record (or store) or update the instruction, data, or signal in the memory 203 to control the electronic device 200 or a different component in the electronic device 200.

The processor 201 may include at least one processor. For example, the processor 201 may include at least one of an application processor for controlling a program of a higher layer such as an application, a communication processor for controlling a function such as communication, and an audio codec chip for controlling encoding and decoding related to an audio signal.

The processor 201 may interpret or process a message, data, instruction, or signal received from the memory 203 or the communication circuit 205. The processor 201 may generate a new message, data, instruction, or signal, based on the received message, data, instruction, or signal. The processor 201 may provide the processed or generated message, data, instruction, or signal to the memory 203 or the communication circuit 205.

The memory 203 may store an instruction for controlling the electronic device 200, a control instruction code, control information, or user data. For example, the memory 203 may store at least one of an application, an operating system, middleware, and a device driver.

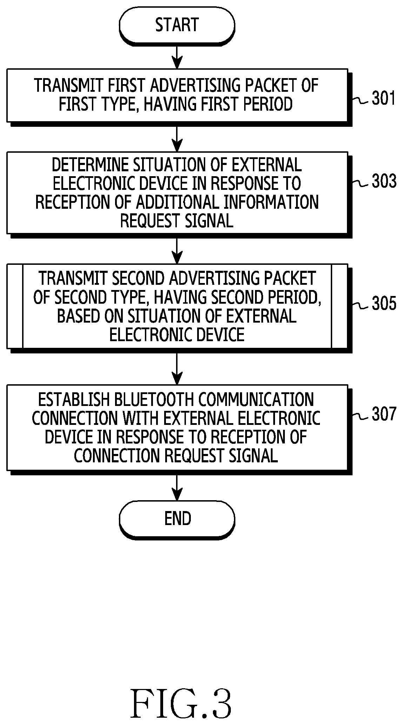

The communication circuit 205 may be used to establish a communication path between the electronic device 200 and a different electronic device (e.g., the electronic device 102 or 304 of FIG. 3 or the server 108 of FIG. 1). For example, the communication circuit 205 may be a module for at least one of a Bluetooth communication scheme, a Bluetooth Low Energy (BLE) communication scheme, a Wireless Fidelity (Wi-Fi) communication scheme, a cellular (or mobile) communication scheme, and a wired communication scheme. The communication circuit 205 may provide the processor 201 with a signal, data, or message received from the different electronic device. The communication circuit 205 may transmit to the different electronic device the signal, data, or message provided from the processor 501.

According to various embodiments, when a Bluetooth device search function of the electronic device 200 is activated (e.g., when the electronic device 200 operates in an advertising mode), the processor 201 may transmit a first advertising packet of a first type, having a first period (e.g., a value between 20 milliseconds and 10.24 seconds), via the communication circuit 205. For example, the processor 201 may transmit the first advertising packet of the first type, having the first period, via the communication circuit 205, in response to reception of an input which requests to activate the Bluetooth device search function. According to an embodiment, the first type may include a type (e.g., ADV_IND PDU type) in which a signal can be broadcast to enable a connection and search of all external electronic devices located around the electronic device 200. According to an embodiment, the first advertising packet may include address information of the electronic device 200 and service information using Bluetooth communication.

According to various embodiments, when the electronic device 200 supports an active scan scheme, the processor 201 may receive an additional information request signal from an external electronic device while receiving the first advertising packet of the first type, having the first period. In response to reception of the additional information request signal, the processor 201 may transmit additional information associated with the service information included in the first advertising packet to the external electronic device via the communication circuit 205. According to an embodiment, the processor 201 may determine a situation of the external electronic device, based on scan address information included in the additional information request signal, and may transmit a second advertising packet of a second type, having a second period, based on the situation of the external electronic device. For example, the processor 201 may determine the situation of the external electronic device by identifying the scan address information included in the additional information request signal. If the situation of the external electronic device is a first situation (e.g., a situation in which an obstacle is located between the electronic device and the external electronic device, a situation in which a plurality of different external electronic devices for transmitting and/or receiving a radio signal are located around the external electronic device, or a situation in which a battery residual capacity of the external electronic device is less than or equal to a reference residual capacity), the processor 201 may transmit the second advertising packet of the second type, having the second period (e.g., a value less than 10 milliseconds or 3.75 milliseconds) faster than the first period, via the communication circuit 205. For example, upon receiving the additional information request signal, the processor 201 may identify a Bit Error Rate or Bit Error Ratio (BER) and/or a Packet Error Rate or Packet Error Ratio (PER), by identifying at least part of the scan address information included in the additional information request signal. If the identified value exceeds a reference value, the processor 201 may determine that the situation of the electronic device is the first situation, and may transmit the second advertising packet of the second type, having the second period. According to an embodiment, the second type may include a type (e.g., ADV_DIRECT_IND PDU Type) to connect with a specific external electronic device. If the BER or the PER is less than or equal to the reference value, the processor 201 may determine that the situation of the electronic device is a second situation (e.g., a situation in which there is no obstacle around the external electronic device or there is no plurality of wireless communication devices around the external electronic device), and may persistently perform the operation of transmitting the first advertising packet of the first type, having the first period. According to an embodiment, the first advertising packet of the first type, having the first period, and the second advertising packet of the second type, having the second period, may be transmitted independently of each other. According to an embodiment, the processor 201 may transmit additional information requested by the external electronic device via the communication circuit 205 before transmitting the second advertising packet of the second type, having the second period. Upon reception of a connection request signal from the external electronic device which has received the first advertising packet of the first type, having the first period, and/or the second advertising packet of the second type, having the second period, via the communication circuit 205, the processor 201 may establish a Bluetooth communication connection with the external electronic device.

According to various embodiments, when the electronic device 200 supports a passive scan scheme, the processor 201 may obtain situation information of the electronic device 200 while receiving the first advertising packet of the first type, having the first period, and may transmit the second advertising packet of the second type, having the second period faster than the first period, based on the situation information. For example, the processor 201 may identify the BER and/or the PER while transmitting the first advertising packet of the first type, having the first period. If the identified value exceeds a reference value, the processor 201 may determine that the situation of the electronic device is the first situation and thus may transmit the second advertising packet of the second type, having the second period. If the BER or the PER is less than or equal to the reference value, the processor 201 may determine that the situation of the electronic device is the second situation, and thus may maintain the transmitting of the first advertising packet of the first type, having the first period. Upon receiving a communication connection request from the external electronic device which has received the first advertising packet of the first type, having the first period, and/or the second advertising packet of the second type, having the second period, the processor 201 may establish a Bluetooth communication connection with the external electronic device.

According to various embodiments, when a function of receiving a Bluetooth signal transmitted from the external electronic device is activated (e.g., when the electronic device 200 operates in a scanning mode), the processor 201 may receive the first advertising packet of the first type, having the first period, from the external electronic device via the communication circuit. The processor 201 may determine whether to establish a communication connection with the external electronic device which has transmitted the first advertising packet, based on the service information included in the first advertising packet.

According to various embodiments, when the electronic device 200 supports the active scan scheme and establishes the communication connection with the external electronic device which has transmitted the first advertising packet, in order to obtain additional information associated with the service information included in the first advertising packet, the processor 201 may transmit an additional information request signal to the external electronic device which has transmitted the first advertising packet and may receive the additional information from the external electronic device. According to an embodiment, the processor 201 may add scan address information associated with the situation of the electronic device 200 to the additional information request signal. For example, the processor 201 may identify the BER and/or the PER in response to reception of the first advertising packet, and if the identified value exceeds a reference value, may add the scan address information associated with the first situation to the additional information request signal. As another example, the processor 201 may identify the BER and/or the PER in response to reception of the first advertising packet, and if the identified value is less than or equal to the reference value, may add situation information associated with the second situation to the additional information request signal. Upon receiving the second advertising packet of the second type, having the second period, or the first advertising packet of the first type, having the first period, from the external electronic device after the additional information request signal is transmitted, the processor 201 may transmit a connection request signal to the external electronic device via the communication circuit 205 to establish a Bluetooth communication connection with the external electronic device.

According to various embodiments, when the electronic device 200 supports the passive scan scheme and establishes the communication connection with the external electronic device transmitting the first advertising packet, the first advertising packet of the first type, having the first period, may be received again after receiving the first advertising packet of the first type, having the first period, or the second advertising packet of the second type, having the second period, may be received after receiving the first advertising packet of the first type, having the first period. **In** this case, the processor 201 may transmit a connection request signal to the external electronic device via the communication circuit 205 to establish a Bluetooth communication connection with the external electronic device.

According to various embodiments, the electronic device 200 may further include a different communication circuit (not shown) including a module for a Near Field Communication (NFC) communication scheme to allow the external electronic device operating in a sleep mode to wake up.

According to various embodiments, the electronic device 200 may further include a different communication circuit (not shown) including a module for an Ultra Wide-Band (UWB) communication scheme to measure a distance between the electronic device 200 and the external electronic device. According to an embodiment, after a Bluetooth communication connection is established between the electronic device 200 and the external electronic device, the processor 201 may establish a UWB communication connection with the external electronic device via the different communication circuit, and may measure a distance between the electronic device 200 and the external electronic device while the UWB communication connection is established. If the measured distance is less than a reference distance, the processor 201 may transmit, to the external electronic device, information (e.g., a digital key) specified to provide a service (e.g. for opening a vehicle door) associated with Bluetooth communication.

According to various embodiments, the electronic device 200 may further include a module (e.g., a GNSS communication module) (not shown) to obtain location information of the electronic device 200.

According to various embodiments, an electronic device (e.g., the electronic device 101 of FIG. 1 or the electronic device 200 of FIG. 2) may include a communication circuit (e.g., the communication module 190 of FIG. 1 or the communication circuit 205 of FIG. 2), a processor (e.g., the processor 120 of FIG. 1 or the processor 201 of FIG. 2) operatively coupled to the communication circuit, and a memory (e.g., the memory 130 of FIG. 1 or the memory 203 of FIG. 2) operatively coupled to the processor. The memory may store instructions, when executed, causing the processor to transmit a first advertising packet of a first type, having a first period, via the communication circuit, determine a situation of an external electronic device by identifying scan address information included in an additional information request signal in response to reception of the additional information request signal from the external electronic device which has received the first advertising packet, transmit a second advertising packet of a second type, having a second period faster than the first period, via the communication circuit, based on the situation of the external electronic device, and establish a Bluetooth communication connection with the external electronic device in response to reception of a connection request signal.

According to various embodiments, the instructions may cause the processor to transmit a second advertising packet of a second type, having a second period, if the situation of the external electronic device is a first situation.

According to various embodiments, the instructions may cause the processor to maintain the transmitting of the first advertising packet of the first type, having the first period, if the situation of the external electronic device is a second situation.

According to various embodiments, the instructions may cause the processor to transmit the second advertising packet of the second type, having the second period, during a specific time, and stop transmission of the second advertising packet when the specified time elapses.

According to various embodiments, the instructions may cause the processor to stop transmission of the second advertising packet of the second type, having the second period, in response to establishing of the Bluetooth communication connection with the external electronic device.

According to various embodiments, the instructions may cause the processor to stop transmission of the second advertising packet of the second type, having the second period, when a specified time elapses after transmitting the second advertising packet of the second type, having the second period.

According to various embodiments, the instructions may cause the processor to maintain the transmitting of the first advertising packet of the first type, having the first period, if the situation of the electronic device is the second situation.

According to various embodiments, the first type may include a type in which a signal is broadcast to enable a connection and search of external electronic devices located around the electronic device. The second type may be a type to connect with a specific external electronic device.

According to various embodiments, an external electronic device (e.g., the external electronic device 104 of FIG. 1 or the electronic device 200 of FIG. 2) may include a communication circuit (e.g., the communication circuit 205 of FIG. 2), a processor (e.g., the processor 201 of FIG. 2) operatively coupled to the communication circuit, and a memory (e.g., the memory 203 of FIG. 2) operatively coupled to the processor. The memory may store instructions, when executed, causing the processor to obtain situation information of the external electronic device, in response to reception of a first advertising packet of a first type, having a first period and transmitted from an electronic device, determine a situation of the external electronic device, based on the situation information of the external electronic device, transmit an additional information request signal including scan address information associated with the situation of the external electronic device to the electronic device via the communication circuit, transmit a connection request signal to the electronic device via the communication circuit, in response to reception of a second advertising packet of a second type, having a second period faster than the first period, and establish a Bluetooth communication connection with the electronic device.

According to various embodiments, the instructions may cause the processor to determine whether to establish the Bluetooth communication connection with the electronic device, based on service information included in the first advertising packet of the first type, having the first period, and obtain situation information of the external electronic device when the Bluetooth communication connection with the electronic device is established.

According to various embodiments, the instructions may cause the processor to, as at least part of the determining of the situation of the external electronic device, determine whether the situation of the external electronic device is a first situation, based on the situation information, and if the situation of the external electronic device is the first situation, transmit an additional information request signal including scan address information associated with the first situation to the electronic device via the communication circuit, so that the electronic device transmits the second adverting packet of the second type, having the second period.

According to various embodiments, the instructions may cause the processor to, if the situation of the external electronic device is a second situation, transmit an additional information request signal including scan address information associated with the second situation to the electronic device via the communication circuit, so that the electronic device maintain the transmitting of the first adverting packet of the first type, having the first period.

According to various embodiments, the instructions may cause the processor to, as at least part of the obtaining of the situation information, identify at least one of a Bit Error Rate or Bit Error Ratio (BER) and/or a Packet Error Rate or Packet Error Ratio (PER), a battery residual capacity of the electronic device, and a location of the electronic device.

According to various embodiments, an electronic device (e.g., the electronic device 101 of FIG. 1 or the electronic device 200 of FIG. 2) may include a communication circuit (e.g., the communication module 190 of FIG. 1 or the communication circuit 205 of FIG. 2), a processor (e.g., the processor 120 of FIG. 1 or the processor 201 of FIG. 2) operatively coupled to the communication circuit, and a memory (e.g., the memory 130 of FIG. 1 or the memory 203 of FIG. 2) operatively coupled to the processor. The memory may store instructions, when executed, causing the processor to transmit a first advertising packet of a first type, having a first period, via the communication circuit, obtain situation information of the electronic device while transmitting the first advertising packet of the first type, having the first period, transmit a second advertising packet of a second type, having a second period faster than the first period, via the communication circuit, based on the situation information, and establish a Bluetooth communication connection with the external electronic device in response to reception of a connection request signal.

According to various embodiments, the instructions may cause the processor to, as at least part of the transmitting of the second advertising packet of the second type, having the second period, determine a situation of the electronic device, and if the situation of the electronic device is a first situation, transmit the second adverting packet of the second type, having the second period.

According to various embodiments, the instructions may cause the processor to, if the situation of the electronic device is a second situation, maintain the transmitting of the first advertising packet having the first period.

According to various embodiments, the instructions may cause the processor to, as at least part of the obtaining of the situation information, identify at least one of a BER and/or a PER, a battery residual capacity of the electronic device, and a location of the electronic device.

According to various embodiments, the instructions may cause the processor to stop transmission of the second advertising packet, when a specified time elapses after transmitting the second advertising packet type, having the second period.

According to various embodiments, the instructions may cause the processor to stop transmission of the second advertising packet having the second period in response to establishing of the Bluetooth communication connection with the external electronic device.

According to various embodiments, an external electronic device (e.g., the external electronic device 104 of FIG. 1 or the electronic device 200 of FIG. 2) may include a communication circuit (e.g., the communication circuit 205 of FIG. 2), a processor (e.g., the processor 201 of FIG. 2) operatively coupled to the communication circuit, and a memory (e.g., the memory 203 of FIG. 2) operatively coupled to the processor. The memory may store instructions, when executed, causing the processor to receive a first advertising packet of a first type, having a first period and transmitted from an electronic device, transmit an additional information request signal to the electronic device via the communication circuit in response to reception of a second advertising packet of a second type, having a second period faster than the first period, and establish a Bluetooth communication connection with the electronic device.

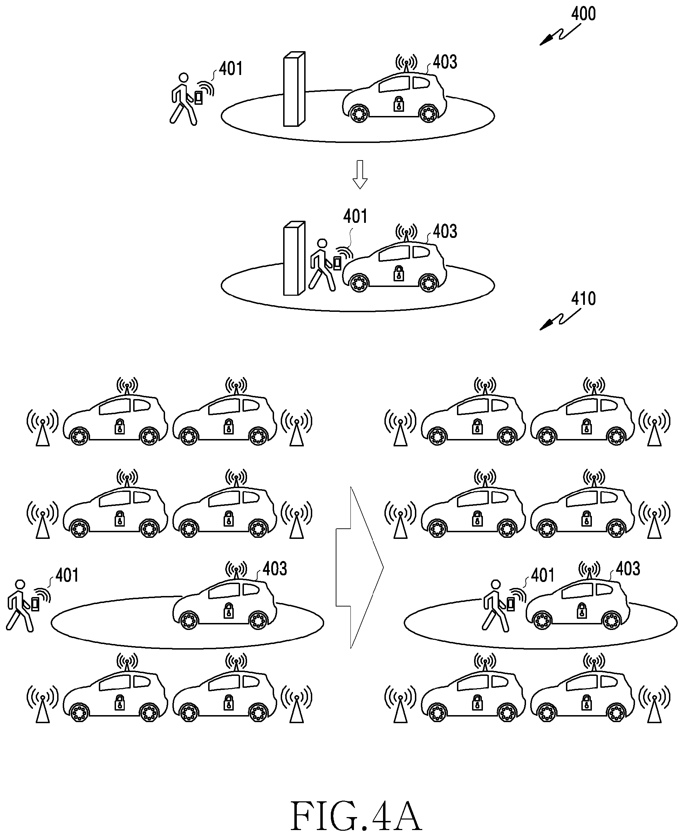

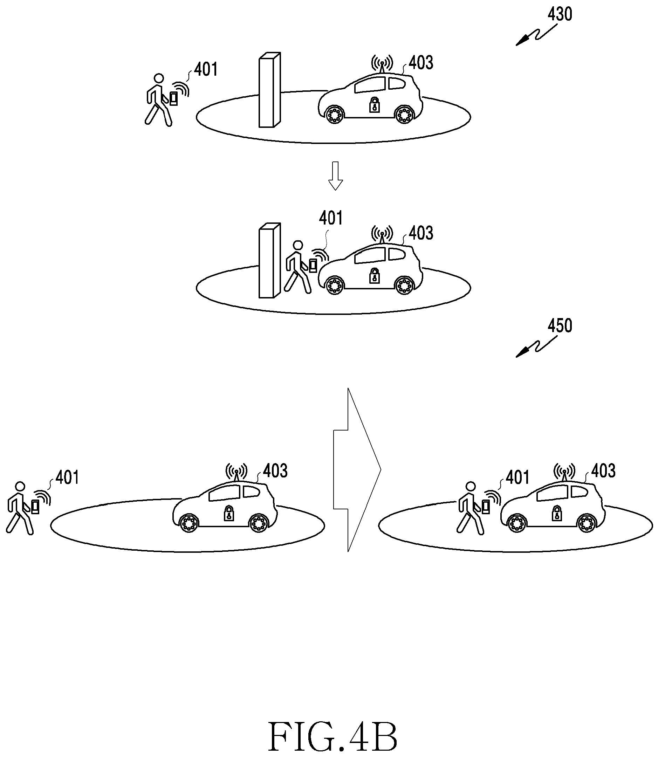

FIG. 3 is a flowchart illustrating an example of a method of establishing a Bluetooth communication connection in an electronic device according to various embodiments. FIG. 4A and FIG. 4B are exemplary views illustrating a situation in which a Bluetooth communication connection between an electronic device and an external electronic device is delayed according to various embodiments.

Referring to FIG. 3 and FIGs. 4A and 4B, in operation 301, a processor (e.g., the processor 120 of FIG. 1 or the processor 201 of FIG. 2) of an electronic device (e.g., the electronic device 101 of FIG. 1 or the electronic device 200 of FIG. 2) may transmit a first advertising packet of a first type, having a first period, via a communication circuit (e.g., the communication module 190 of FIG. 1 or the communication circuit 205 of FIG. 2). For example, when a Bluetooth device search function of the electronic device 200 is activated (e.g., when the electronic device 200 operates in an advertising mode), the processor 201 may transmit the first advertising packet of the first type, having the first period (e.g., a value between 20 milliseconds and 10.24 seconds), via the communication circuit 205. According to an embodiment, the first type may include a type (e.g., ADV_IND PDU type) in which a signal can be broadcast to enable a connection and search from all external electronic devices. According to an embodiment, the first advertising packet may include address information of the electronic device 200 and service information using Bluetooth communication. According to an embodiment, the address information of the electronic device 101 may consist of 6-byte data, and the service information may consist of up to 31-byte data. According to an embodiment, an external electronic device (e.g., the electronic device 104 of FIG. 1 or the electronic device 200 of FIG. 2) receiving the first advertising packet from the electronic device 200 may obtain situation information of the external electronic device, determine a situation of the external electronic device, based on the obtained situation information, generate an additional information request signal including scan address information associated with the determined situation and address information of the electronic device 200, and transmit the generated additional information request signal to the electronic device 200. According to an embodiment, the scan address information may include information associated with a first situation in which fast Bluetooth communication is necessary or information associated with a second situation in which the fast Bluetooth communication is not required. According to an embodiment, as shown in FIG. 4A, the first situation may include a situation 400 in which an obstacle is located between an electronic device 401 and an external electronic device 403 or a situation 410 in which a plurality of external electronic devices for transmitting and/or receiving a radio signal are located around the electronic device 401 and the external electronic device 403. However, the disclosure is not limited thereto. For example, the first situation may further include a situation in which a battery residual capacity of the electronic device 401 or external electronic device 403 is less than or equal to a reference residual capacity, or a situation in which the electronic device 401 or the external electronic device 403 is located at a specified location (e.g., home or office). According to an embodiment, as shown in FIG. 4B, the second situation may include a situation 430 in which there is no obstacle between the electronic device 401 and the external electronic device 403 or a situation 450 in which a different external electronic device for transmitting and/or receiving a radio signal is not located around the electronic device 401 and the external electronic device 403. However, the disclosure is not limited thereto. For example, the second situation may further include a situation in which a battery residual capacity of the electronic device 401 or external electronic device 403 exceeds a reference residual capacity or a situation in which the electronic device 401 or the external electronic device 403 is not located at a specified location.

**In** operation 303, the processor 201 may determine a situation of the external electronic device (e.g., the electronic device 104 of FIG. 1 or the electronic device 200 of FIG. 2) in response to reception of the additional information request signal. For example, the processor 201 may identify scan address information associated with the first situation (e.g., information indicating the situation in which the obstacle is located around the external electronic device, the situation 410 in which the plurality of electronic devices for transmitting and/or receiving the radio signal are located around the external electronic device, the situation in which the battery residual capacity is less than or equal to the reference residual capacity of the external electronic device, or the situation in which the external electronic device is located at the specified location (e.g., home or office)) or scan address information associated with the second situation (e.g., information indicating the situation in which there is no obstacle around the external electronic device, the situation in which there is no plurality of communication devices around the external electronic device, the situation in which the battery residual capacity of the external electronic device exceeds the reference residual capacity, or the situation in which the external electronic devices is not located at the specified location) from the additional information request signal, and may determine the situation of the external electronic device, based on the identified scan address information. According to an embodiment, the additional information request signal may include at least one of address information of the external electronic device, address information of the electronic device 200, and scan address information associated with the situation of the external electronic device. According to an embodiment, in response to the additional information request signal, the processor 201 may transmit, to the external electronic device, additional information (e.g., additional information associated with service information included in the first advertising packet) requested in the additional information request signal via the communication circuit 205.

In operation 305, the processor 201 may transmit a second advertising packet of a second type having a second period, via the communication circuit 205, based on the situation. For example, the processor 201 may identify that the situation of the external electronic device is the first situation, based on the identifying of the scan address information associated with the first situation from the additional information request signal received from the external electronic device, and may transmit the second advertising packet of the second type, having the second period faster than the first period, via the communication circuit 205. In this case, the first advertising packet of the first type, having the first period, may be persistently transmitted even while the second advertising packet of the second type, having the second period, is transmitted, and signal transmission may be stopped for the second advertising packet of the second type, having the second period, when a specified time (e.g., 1.28 seconds) elapses or when the electronic device 200 establishes a Bluetooth communication connection with the external electronic device. According to an embodiment, the second type may include a type (e.g., ADV_DIRECT_IND PDU Type) to connect with a specific external electronic device. According to an embodiment, the second advertising packet may include address information of the electronic device 200 and address information of a specific external electronic device. According to an embodiment, each of the address information of the electronic device 200 and the address information of the specific external electronic device may consist of 6-byte data. When scan address information associated with the second situation is identified from the additional information request signal received from the external electronic device, the processor 201 may identify that the situation of the external electronic device is the second situation, and may persistently perform the operation of transmitting the first advertising packet of the first type, having the first period.

In operation 307, in response to reception of a connection request signal, the processor 201 may establish a Bluetooth communication connection (or BLE communication connection) with the external electronic device via the communication circuit 205.

According to various embodiments, the electronic device may identify the situation of the external electronic device by identifying the scan address information included in the additional information request signal received from the external electronic device while transmitting the first advertising packet of the first type, having the first period, and when the identified situation corresponds to the first situation in which a fast Bluetooth connection is necessary, may broadcast the second advertising packet, thereby reducing a time required for the Bluetooth communication connection with the external electronic device.

Although it is described above that the electronic device performs the fast Bluetooth communication connection operation on the basis of the situation of the external electronic device, according to various embodiments of the disclosure, the electronic device may also perform the fast Bluetooth communication connection operation on the basis of a type of the external electronic device. For example, the electronic device may identify the type of the external electronic device from the scan address information included in the additional information request signal, and if the type of the external electronic device corresponds to a specified type (e.g., vehicle or digital door lock), may perform the process of operations 305 to 307 to establish the fast Bluetooth communication connection with the external electronic device.

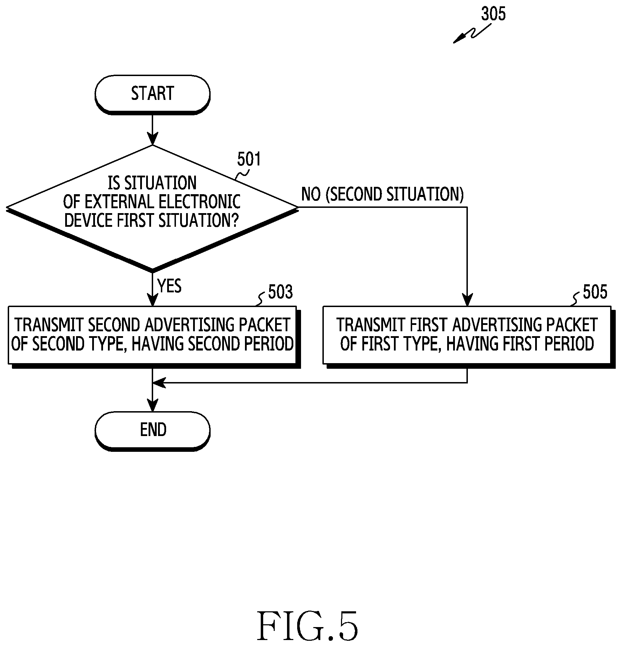

FIG. 5 is a flowchart illustrating a method of transmitting a second advertising packet of a second type, having a second period, in an electronic device according to various embodiments. The following description may be a detailed description on the operation of transmitting the second advertising packet of the second type, having the second period, based on the situation information, which is described in the operation 305 of FIG. 3.

Referring to FIG. 5, in operation 501, a processor (e.g., the processor 120 of FIG. 1) of an electronic device (e.g., the electronic device 101 of FIG. 1 or the electronic device 200 of FIG. 2) may determine whether a situation of an external electronic device is a first situation, based on scan address information included in an additional information request signal received from the external electronic device (e.g., the electronic device 104 of FIG. 1 or the electronic device 200 of FIG. 2). For example, if scan address information associated with the first situation (e.g., a situation in which an obstacle is located around the external electronic device, a situation in which a battery residual capacity is less than or equal to a reference residual capacity of the external electronic device, or a situation in which the external electronic device is located at a specified location (e.g., home or office)) is identified from the additional information request signal, the processor 201 may determine that the situation of the external electronic device is the first situation. As another example, if scan address information associated with a second situation (e.g. a situation in which there no obstacle around the external electronic device, a situation in which there is no plurality of wireless communication devices around the external electronic device, a situation in which a battery residual capacity of the external electronic device exceeds a reference residual capacity, or a situation in which the external electronic device is not located at a specified location) is identified from the additional information request signal, the processor 201 may determine that the situation of the external electronic device is the second situation. If it is determined that the situation of the external electronic device is the first situation, the processor 201 may perform operation 503. If it is determined that the situation of the external electronic device is the second situation, the processor 201 may perform operation 505.

In operation 503, if it is determined that the situation of the external electronic device is the first situation, the processor 201 may transmit a second advertising packet of a second type, having a second period, via the communication circuit 205. For example, in order to increase a Bluetooth communication connection speed between the electronic device 200 and the external electronic device, the processor 201 may transmit the second advertising packet of the second type, having the second period faster than the first period, via the communication circuit 205, while the first advertising packet of the first type, having the first period is transmitted. For example, the first advertising packet of the first type may include a packet which is broadcast to enable a connection and search from all external electronic devices located around the electronic device 200, and the second advertising packet of the second type may include a packet which is broadcast aiming at a connection with a specific external electronic device. According to an embodiment, the first advertising packet of the first type, having the first period, may be persistently transmitted even while the second advertising packet of the second type, having the second period, is transmitted, and signal transmission may be stopped for the second advertising packet having the second period when a specified time (e.g., 1.28 seconds) elapses or when the electronic device 200 establishes a Bluetooth communication connection with the external electronic device.

In operation 505, if it is determined that the situation of the external electronic device is the second situation, the processor 201 may transmit the first advertising packet having the first period, via the communication circuit 205. For example, if it is determined that the situation of the external electronic device is the second situation, the processor 201 may maintain the transmitting of the first advertising packet of the first type, having the first period.

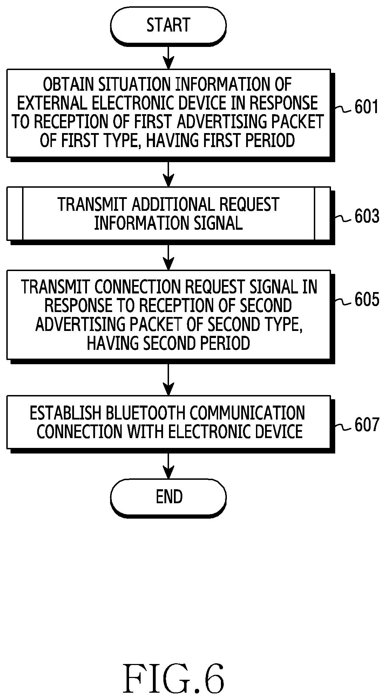

FIG. 6 is a flowchart illustrating an example of a method of establishing a Bluetooth communication connection in an external electronic device according to various embodiments.

Referring to FIG. 6, in operation 601, a processor (e.g., the processor 201 of FIG. 2) of an external electronic device (e.g., the electronic device 104 of FIG. 1 or the electronic device 200 of FIG. 2) may obtain situation information of an external electronic device in response to reception of a first advertising packet of a first type, having a first period. For example, the processor 201 may determine whether to establish a communication connection with an electronic device (e.g., the electronic device 101 of FIG. 1 or the electronic device 200 of FIG. 2) which has transmitted the first advertising packet, based on service information included in the first advertising packet, and when the communication connection is established with the electronic device which has transmitted the first advertising packet, may obtain situation information of the external electronic device 200. According to an embodiment, the processor 201 may obtain the situation information of the external electronic device 200, by identifying a battery status (e.g., a battery residual capacity) of the external electronic device 200. According to an embodiment, the processor 201 may obtain the situation information of the external electronic device 200, by identifying a BER and/or a PER. According to an embodiment, the processor 201 may obtain the situation information of the external electronic device 200, by identifying a current location of the external electronic device 200.

In operation 603, the processor 201 may transmit an additional information request signal via the communication circuit 205 in response to obtaining of the situation information. For example, the processor 201 may determine whether the situation of the external electronic device 200 is a first situation, based on situation information, if the situation of the external electronic device 200 is the first situation, generate an additional information request signal including scan address information associated with the first situation and address information of an electronic device which has broadcast a first advertising packet, and transmit the generated additional information request signal to the electronic device via the communication circuit 205. According to various embodiments, the processor 201 may determine whether the situation of the external electronic device 200 is a second situation, and if the situation of the external electronic device 200 is the second situation, generate an additional information request signal including scan address information associated with the second situation and address information of the electronic device which has transmitted the first advertising packet, and transmit the generated additional information request signal to the electronic device via the communication circuit 205. According to various embodiments, the processor 201 may generate the additional request information signal to include information a type of the external electronic device 200.

In operation 605, the processor 201 may transmit a connection request signal to the communication circuit 205, in response to reception of a second advertising packet of a second type, having a second period faster than the first period.

In operation 607, the processor 201 may establish a Bluetooth communication connection (or a BLE communication connection) with the electronic device via the communication circuit 205.

The external electronic device according to various embodiments may identify the situation of the external electronic device upon reception of the advertising packet from the electronic device, and thus may determine whether there is a need to establish a fast Bluetooth communication connection, thereby providing the electronic device with information associated with the determination result. Accordingly, the external electronic device may reduce a time required for the Bluetooth communication connection with the electronic device in a situation in which the fast Bluetooth communication connection is necessary.

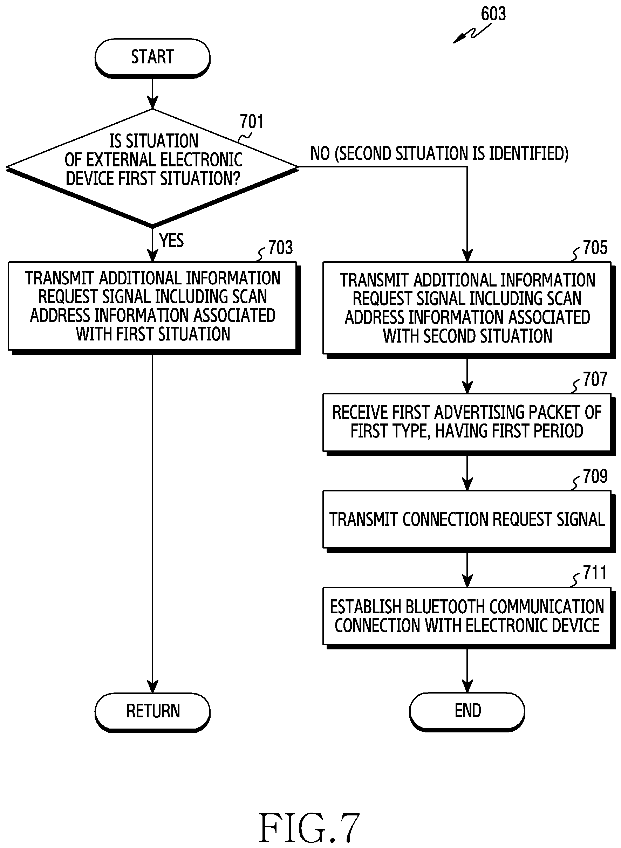

FIG. 7 is a flowchart illustrating a method of transmitting an additional information request signal including situation information in an external electronic device according to various embodiments. The following description may be a detailed description on the operation of transmitting the additional information request signal, which is described in the operation 603 of FIG. 6.

Referring to FIG. 7, in operation 701, a processor (e.g., the processor 201 of FIG. 2) of an external electronic device (e.g., the electronic device 104 of FIG. 1 or the electronic device 200 of FIG. 2) may determine whether a situation of the external electronic device is a first situation. For example, when a battery residual capacity of the external electronic device 200 is less than or equal to a reference residual capacity (e.g., 10%), the processor 201 may determine that the situation of the external electronic device 200 is the first situation. As another example, when a BER and/or a PER exceeds a reference value, the processor 201 may determine that the situation of the external electronic device 200 is the first situation. As another example, when a current location of the external electronic device 200 corresponds to a specified location (e.g., home or office), the processor 201 may determine that the situation of the external electronic device 200 is the first situation. The processor 201 may perform operation 703 if the situation of the external electronic device 200 is the first situation, and may perform operations 705 to 711 if the situation of the external electronic device is not the first situation.

If the situation of the external electronic device 200 is the first situation, operation 703, the processor 201 may transmit an additional information request signal including scan address information associated with the first situation via the communication circuit 205. For example, the processor 201 may generate the scan address information associated with the first situation, generate an additional information request signal including the generated scan address information and address information of the electronic device which has broadcast a first advertising packet, and transmit the generated additional information request signal to the electronic device via the communication circuit 205.

If the situation of the external electronic device is not the first situation (e.g., in case of a second situation), in operation 705, the processor 201 may transmit an additional information request signal including scan address information associated with the second situation via the communication circuit 205. For example, the processor 201 may generate the scan address information associated with the second situation, generate an additional information request signal including the generated scan address information and the address information of the electronic device which has broadcast the first advertising packet, and transmit the generated additional information request signal to the electronic device via the communication circuit 205.

**In** operation 707, the processor 201 may receive a first advertising packet of a first type having a first period, from the electronic device via the communication circuit 205.

In operation 709, the processor 201 may transmit a connection request signal to the electronic device via the communication circuit 205, in response that the first advertising packet of the first type having the first period is received again.

In operation 711, the processor 201 may establish a Bluetooth communication connection with the electronic device via the communication circuit 205.

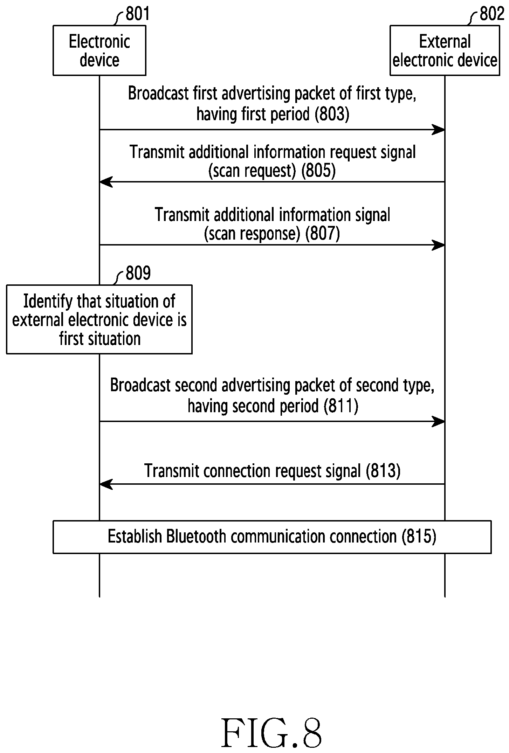

FIG. 8 illustrates another example of a method of establishing a Bluetooth communication connection between an electronic device and an external electronic device according to various embodiments.

Referring to FIG. 8, in operation 803, an electronic device 801 (e.g., the electronic device 101 of FIG. 1 or the electronic device 200 of FIG. 2) may broadcast a first advertising packet of a first type, having a first period.

In operation 805, an external electronic device 802 (e.g., the electronic device 104 of FIG. 1 or the electronic device 200 of FIG. 2) may transmit an additional information request signal to the electronic device 801, in response to reception of the first advertising packet. For example, the external electronic device 802 may determine whether to establish a communication connection with the electronic device 801, based on service information of the first advertising packet which is broadcast from the electronic device 801, and when a communication connection with the electronic device 801 is established, may obtain situation information of the external electronic device 802. If it is identified based on the obtained situation information that the situation of the external electronic device 802 is a second situation, the external electronic device 802 may transmit an additional information request signal including scan address information associated with the second situation to the electronic device 801.

In operation 807, the electronic device 801 may transmit additional information associated with the service information included in the first advertising packet to the external electronic device 802, in response to reception of the additional information request signal.

In operation 809, the electronic device 801 may identify that the situation of the external electronic device is a first situation, by identifying scan address information included in the additional information request signal.

In operation 811, the electronic device 801 may broadcast a second advertising packet of a second type, having a second period faster than the first period, in response to identifying that the situation of the external electronic device 802 is the first situation. According to an embodiment, the first advertising packet of the first type, having the first period, and the second advertising packet of the second type, having the second period, may be transmitted independently of each other. For example, the first advertising packet may be broadcast even while the second advertising packet is broadcast.

In operation 813, the external electronic device 802 may transmit a connection request signal to the electronic device 801, in response to reception of the second advertising packet which is broadcast from the electronic device 801.

In operation 815, the electronic device 801 may establish a Bluetooth communication connection (or a BLE communication connection) with the external electronic device 802, based on a connection request signal received from the external electronic device 802.

As described above, the electronic device may identify the situation of the external electronic device, based on the scan
address information included in the additional information request signal received from the external electronic device while broadcasting the first advertising packet of the first type, having the first period, and when the external electronic device is in the first situation in which a fast Bluetooth connection is necessary, may broadcast the second advertising packet of the second type, having the second period faster than the first period, thereby reducing a time required for the Bluetooth communication connection with the external electronic device.

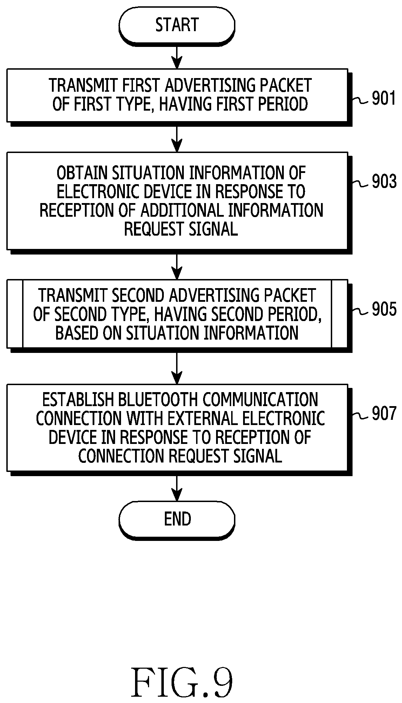

FIG. 9 is a flowchart illustrating another example of a method of establishing a Bluetooth communication connection in an electronic device according to various embodiments.

Referring to FIG. 9, in operation 901, a processor (e.g., the processor 120 of FIG. 1 or the processor 201 of FIG. 2) of an electronic device (e.g., the electronic device 101 of FIG. 1 or the electronic device 200 of FIG. 2) may transmit a first advertising packet of a first type, having a first period, via a communication circuit (e.g., the communication module 190 of FIG. 1 or the communication circuit 205 of FIG. 2). For example, when a Bluetooth device search function of the electronic device 200 is activated (e.g., when the electronic device 200 operates in an advertising mode), the processor 201 may transmit the first advertising packet of the first type, having the first period (e.g., a value between 20 milliseconds and 10.24 seconds), via the communication circuit 205. According to an embodiment, the first type may include a type (e.g., ADV_IND PDU type) in which a signal can be broadcast to enable a connection and search from all external electronic devices. According to an embodiment, the first advertising packet may include address information of the electronic device 200 and service information using Bluetooth communication. According to an embodiment, the address information of the electronic device 200 may consist of 6-byte data, and the service information may consist of up to 31-byte data. According to an embodiment, an external electronic device (e.g., the electronic device 104 of FIG. 1 or the electronic device 200 of FIG. 2) which has received the first advertising packet from the electronic device 200 may transmit an additional information request signal to the electronic device 200 to request for additional information of service information of the first advertising packet.

In operation 903, the processor 201 may obtain situation information of the electronic device 200, in response to reception of the additional information request signal. For example, upon receiving the additional information request signal from the external electronic device (e.g., the electronic device 104 of FIG. 1 or the electronic device 200 of FIG. 2) via the communication circuit 205, the processor 201 may obtain the situation information of the electronic device 200, by identifying a BER and/or a PER. As another example, the processor 201 may obtain the situation information of the electronic device 200, by identifying a battery residual capacity of the electronic device 200. As another example, the processor 201 may obtain the situation information of the electronic device 200, by identifying a location of the electronic device 200. According to an embodiment, in response to the additional information request signal, the processor 201 may transmit, to the external electronic device, additional information (e.g., additional information associated with service information included in the first advertising packet) requested in the additional information request signal via the communication circuit 205.

In operation 905, the processor 201 may transmit a second advertising packet having a second period, based on situation information. For example, the processor 201 may determine whether the situation of the electronic device 200 is a first situation, based on the situation information. If the situation of the electronic device is the first situation, the processor 201 may determine that it is a situation in which a fast Bluetooth communication connection is necessary, and may transmit the second advertising packet of the second type, having the second period faster than the first period, via the communication circuit 205. **In** this case, the first advertising packet having the first period may be persistently transmitted even while the second advertising packet having the second period is transmitted, and signal transmission may be stopped for the second advertising packet having the second period when a specified time (e.g., 1.28 seconds) elapses or when the electronic device 200 establishes a Bluetooth communication connection with the external electronic device. According to an embodiment, the processor 201 may identify a BER and/or a PER, and if the identified value exceeds a reference value, may determine that the situation of the electronic device 200 is the first situation. According to an embodiment, if a battery residual capacity of the electronic device 200 exceeds a reference residual capacity, the processor 201 may determine that the situation of the electronic device 200 is the first situation. According to an embodiment, if a location of the electronic device 200 corresponds to a specified location (e.g., home or office), the processor 201 may determine that the situation of the electronic device 200 is the first situation. According to various embodiments, if the situation of the electronic device 200 is not the first situation (e.g., in case of a second situation), the processor 201 may determine that it is a situation in which a fast Bluetooth communication connection is not required, and thus may maintain the transmitting of the first advertising packet of the first type, having the first period. According to an embodiment, upon receiving the second advertising packet of the second type, having the second period, from the electronic device 200, the external electronic device may transmit a connection request signal to the electronic device 200 to establish a Bluetooth communication connection.

In operation 907, in response to reception of the connection request signal, the processor 201 may establish a Bluetooth communication connection (or a BLE communication connection) with the external electronic device.

According to various embodiments, the electronic device may obtain situation information of the electronic device while transmitting the first advertising packet of the first type, having the first period, and determine whether a fast Bluetooth communication connection is necessary based on the situation information, and when the fast Bluetooth communication connection is necessary, may transmit the second advertising packet having the second period faster than the first period, thereby reducing a time required for the Bluetooth communication connection with the external electronic device.

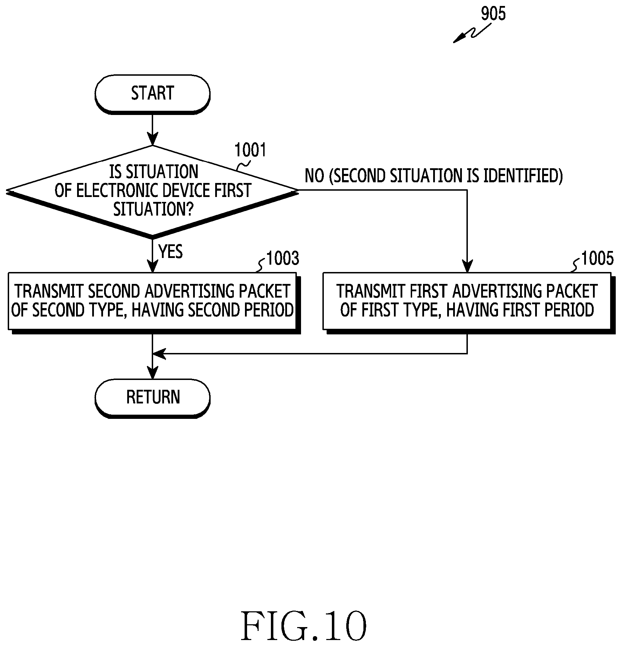

FIG. 10 is a flowchart illustrating a method of transmitting a second advertising packet having a second period in an electronic device according to various embodiments. The following description may be a detailed description on the operation of transmitting the second advertising packet of the second type, having the second period, based on the situation information, which is described in the operation 905 of FIG. 9.

In operation 1001, a processor (e.g., the processor 120 of FIG. 1 or the processor 201 of FIG. 2) of an electronic device (e.g., the electronic device 101 of FIG. 1 or the electronic device 200 of FIG. 2) may determine whether a situation of the electronic device 200 is a first situation (e.g., a situation in which an obstacle is located around an external electronic device, a situation in which a plurality of different electronic devices are located around the external electronic device, or a situation in which a battery residual capacity of the external electronic device is less than or equal to a reference residual capacity). For example, the processor 201 may identify a BER and/or a PER, and if the identified value exceeds a reference value, may determine that the situation of the electronic device 200 is the first situation. As another example, the processor 201 may identify a battery residual capacity of the electronic device 200, and if the battery residual capacity of the electronic device 200 is less than or equal to a reference residual capacity, may determine that the situation of the electronic device 200 is the first situation. As another example, the processor 201 may identify a location of the electronic device 200, and if the location of the electronic device 200 corresponds to a specified location, may determine that the situation of the electronic device 200 is the first situation. The processor 201 may perform operation 1003 if the situation of the electronic device 200 is the first situation, and may perform operation 1005 if the situation of the electronic device 200 is a second situation.

In operation 1003, if the situation of the electronic device 200 is the first situation, the processor 201 may transmit a second advertising packet of a second type, having a second period faster than a first period, via the communication circuit 205. According to an embodiment, the first advertising packet may be persistently transmitted even while the second advertising packet is transmitted, and signal transmission may be stopped for the second advertising packet when a specified time (e.g., 1.28 seconds) elapses or when the electronic device 200 establishes a Bluetooth communication connection with the external electronic device.

In operation 1005, if the situation of the electronic device 200 is the second situation, the processor 201 may transmit a first advertising packet of a first type, having a first period, via the communication circuit 205. For example, the processor 201 may maintain the transmitting of the first advertising packet of the first type, having the first period.

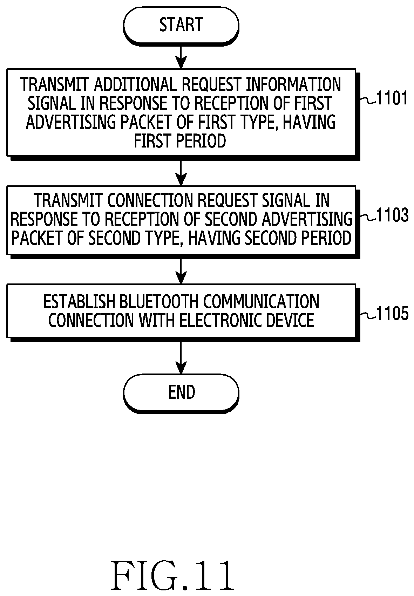

FIG. 11 is a flowchart illustrating another example of a method of establishing a Bluetooth communication connection in an external electronic device according to various embodiments.

Referring to FIG. 11, in operation 1101, a processor (e.g., the processor 201 of FIG. 2) of an external electronic device (e.g., the external electronic device 104 of FIG. 1 or the electronic device 200 of FIG. 2) may transmit an additional request information signal via a communication circuit (e.g., the communication circuit 205 of FIG. 2) in response to reception of a first advertising packet of a first type, having a first period. For example, the processor 201 may determine whether to establish a communication connection with the electronic device (e.g., the electronic device 101 of FIG. 1 or the electronic device 200 of FIG. 2) which has transmitted the first advertising packet, based on service information included in the first advertising packet, and when the communication connection with the electronic device which has transmitted the first advertising packet is established, may transmit the additional information request signal via the communication circuit 205 to request for additional information associated with the service information included in the first advertising packet. According to an embodiment, the additional information request signal may consist of 48 bits, and may include address information of the electronic device and address information of the external electronic device. After transmitting the additional information request signal, the processor 201 may receive additional information from the electronic device via the communication circuit 205.

In operation 1103, the processor 201 may transmit a connection request signal via the communication circuit 205, in response to reception of a second advertising packet of a second type, having a second period.

In operation 1105, the processor 201 may establish a Bluetooth communication connection (or a BLE communication connection) with the electronic device.

The external electronic device according to various embodiments may receive the first advertising packet of the first type, having the first period, and then receive the second advertising packet of the second type, having the second period faster than the first period, and may perform a Bluetooth communication connection with the electronic device, based on reception of the second advertising packet, thereby reducing a time required for the Bluetooth communication connection.

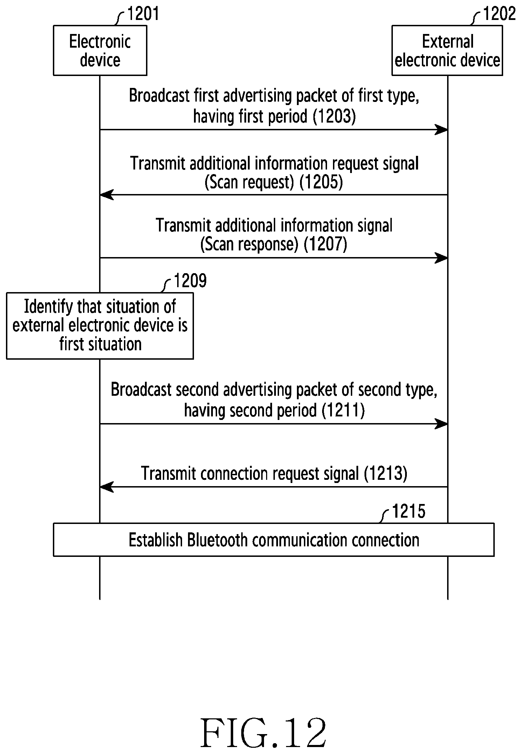

FIG. 12 illustrates another example of a method of establishing a Bluetooth communication connection between an electronic device and an external electronic device according to various embodiments.

Referring to FIG. 12, in operation 1203, an electronic device 1201 (e.g., the electronic device 101 of FIG. 1 or the electronic device 200 of FIG. 2) may broadcast a first advertising packet of a first type, having a first period.

In operation 1205, an external electronic device 1202 (e.g., the electronic device 104 of FIG. 1 or the electronic device 200 of FIG. 2) may transmit an additional information request signal to the electronic device 1201, in response to reception of the first advertising packet. For example, the external electronic device 1202 may determine whether to establish a communication connection with the electronic device 1201, based on service information included in the first advertising packet, and when the communication connection with the electronic deice 1201 is established, may transmit the additional information request signal to request for additional information associated with the service information included in the first advertising packet.

In operation 1207, the electronic device 1201 may transmit an additional information signal, in response to reception of the additional information request signal. For example, the electronic device 1201 may transmit additional information associated with the service information included in the first advertising packet to the external electronic device 1202.

In operation 1209, the electronic device 1201 may identify that the situation of the electronic device 1201 is a first situation. For example, the electronic device 1201 may identify that the situation of the electronic device 1201 is the first situation when a BER and/or a PER exceeds a reference value.

In operation 1211, the electronic device 1201 may broadcast a second advertising packet of a second type, having a second period, in response to identifying that the situation of the electronic device 1201 is the first situation. According to an embodiment, the second advertising packet may be transmitted independently of the first advertising packet.

In operation 1213, the external electronic device 1202 may transmit a connection request signal to the electronic device 1201, in response to reception of the second advertising packet having the second period.

In operation 1215, in response to reception of the connection request signal, the electronic device 1201 may establish a Bluetooth communication connection (or a BLE communication connection) with the external electronic device 1202.

According to various embodiments, the electronic device may obtain situation information of the electronic device while transmitting the first advertising packet having the first period, and if it identified that the situation of the electronic device is the first situation in which the fast Bluetooth communication connection is necessary, based on the situation information, may transmit the second advertising packet having the second period faster than the first period, thereby reducing a time required for the Bluetooth communication connection with the external electronic device.

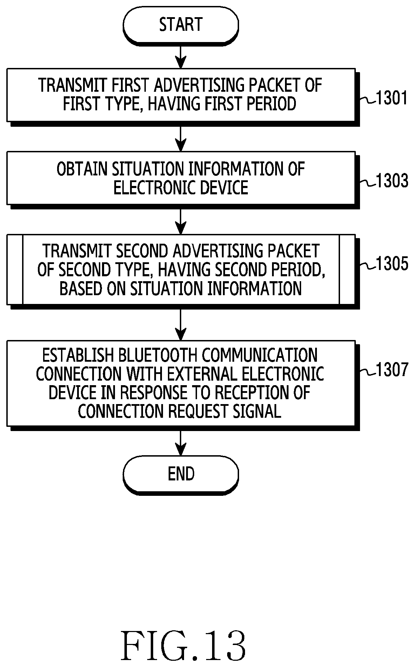

FIG. 13 is a flowchart illustrating another example of a method of establishing a Bluetooth communication connection in an electronic device according to various embodiments.

Referring to FIG. 13, in operation 1301, a processor (e.g., the processor 120 of FIG. 1 or the processor 201 of FIG. 2) of an electronic device (e.g., the electronic device 101 of FIG. 1 or the electronic device 200 of FIG. 2) may transmit a first advertising packet of a first type, having a first period, via a communication circuit (e.g., the communication module 190 of FIG. 1 or the communication circuit 205 of FIG. 2). For example, when a Bluetooth device search function of the electronic device 200 is activated (e.g., when the electronic device 200 operates in an advertising mode), the processor 201 may transmit the first advertising packet having the first period (e.g., a value between 20 milliseconds and 10.24 seconds) via the communication circuit 205. According to an embodiment, the first advertising packet may include address information of the electronic device 200 and service information using Bluetooth communication. According to an embodiment, the address information of the electronic device 101 may consist of 6-byte data, and the service information may consist of up to 31-byte data.

In operation 1303, the processor 201 may obtain situation information of the electronic device 200 while transmitting the first advertising packet of the first type, having the first period. For example, the processor 201 may obtain situation information of the electronic device 200, by identifying a BER and/or a PER. As another example, the processor 201 may obtain situation information of the electronic device by identifying a battery residual capacity of the electronic device 200. As another example, the processor 201 may obtain the situation information of the electronic device 200, by identifying a location of the electronic device 200.

In operation 1305, the processor 201 may transmit a second advertising packet of a second type, having a second period, based on situation information. For example, the processor 201 may determine whether the situation of the electronic device 200 is the first situation (e.g., a situation in which a BER and/or a PER exceeds a reference value, a situation in which a battery residual capacity is less than or equal to a reference residual capacity, or a situation in which a location of the electronic device 200 corresponds to a specified location), based on the situation information, and if the situation of the electronic device 200 is a first situation, may transmit the second advertising packet of the second type, having the second period faster than the first period, via the communication circuit 205. In this case, the first advertising packet of the first type, having the first period, may be persistently transmitted even while the second advertising packet of the second type, having the second period, is transmitted, and signal transmission may be stopped for the second advertising packet of the second type, having the second period, when a specified time (e.g., 1.28 seconds) elapses or when the electronic device 200 establishes a Bluetooth communication connection with the external electronic device. According to various embodiments, if the situation of the electronic device 200 is a second situation (e.g., a situation in which the BER and/or the PER is less than or equal to the reference value, a situation in which the battery residual capacity exceeds the reference residual capacity, or a situation in which the location of the electronic device 200 does not correspond to the specified location), the processor 201 may maintain the transmitting of the first advertising packet of the first type, having the first period.

In operation 1307, in response to reception of a connection request signal, the processor 201 may establish a Bluetooth communication connection (or a BLE communication connection) with the external electronic device.

According to various embodiments, while transmitting the first advertising packet of the first type, having the first period, if it identified that the situation of the electronic device is the first situation in which the fast Bluetooth communication connection is necessary, the electronic device may transmit the second advertising packet having the second period faster than the first period, thereby reducing a time required for the Bluetooth communication connection with the external electronic device.

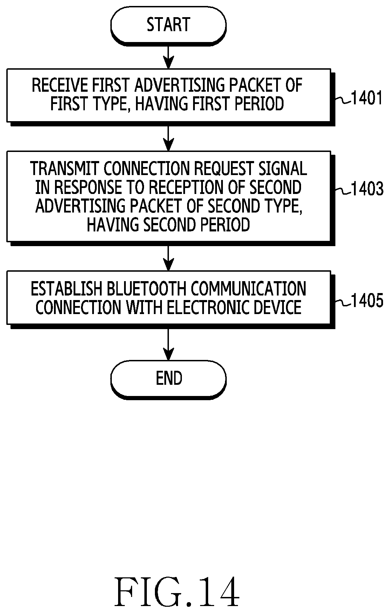

FIG. 14 is a flowchart illustrating another example of a method of establishing a Bluetooth communication connection in an external electronic device according to various embodiments.

Referring to FIG. 14, in operation 1401, a processor (e.g., the processor 201 of FIG. 2) of an external electronic device (e.g., the electronic device 104 of FIG. 1 or the electronic device 200 of FIG. 2) may receive a first advertising packet of a first type, having a first period, via a communication circuit (e.g., the communication circuit 205 of FIG. 2). The processor 201 may determine whether to establish a communication connection with an electronic device (e.g., the electronic device 101 of FIG. 1 or the electronic device 200 of FIG. 2) which has transmitted the first advertising packet, based on service information included in the first advertising packet, and when the communication connection is established with the electronic device, may prepare for a connection request required for the Bluetooth communication connection.

In operation 1403, the processor 201 may transmit a connection request signal via the communication circuit 205 in response to reception of a second advertising packet of a second type, having a second period faster than the first period.

In operation 1405, the processor 201 may establish a Bluetooth communication connection (or a BLE communication connection) with the electronic device.

According to various embodiments, after transmitting the first advertising packet of the first type having the first period, the external electronic device may transmit the second advertising packet of the second type, having the second period faster than the first period, thereby reducing a time required for the Bluetooth communication connection with the external electronic device.

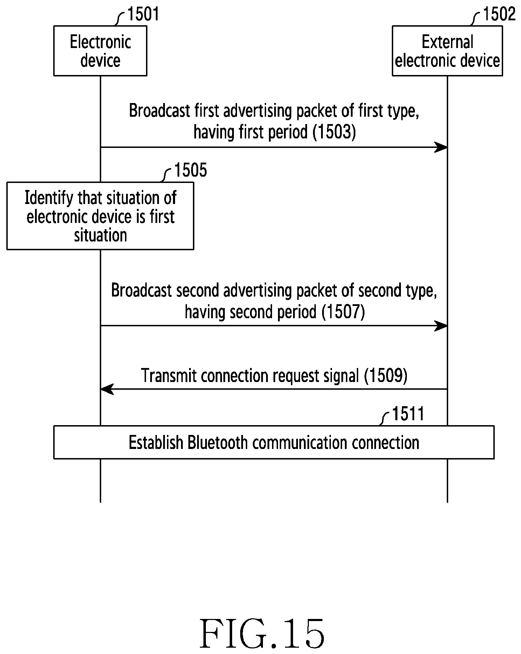

FIG. 15 illustrates another example of a method of establishing a Bluetooth communication connection between an electronic device and an external electronic device according to various embodiments.

Referring to FIG. 15, in operation 1503, an electronic device 1501 (e.g., the electronic device 101 of FIG. 1 or the electronic device 200 of FIG. 2) may broadcast a first advertising packet of a first type, having a first period. Upon receiving the first advertising packet, an external electronic device 1502 may determine whether to establish a Bluetooth communication connection with the electronic device 1501, based on service information included in the first advertising packet. When the Bluetooth communication connection with the electronic device 1501 is established, the external electronic device 1502 may prepare for a connection request.

In operation 1505, the electronic device 1501 may identify that a situation of the electronic device 1501 is a first situation. For example, the electronic device 1501 may identify a BER and/or a PER to obtain situation information of the electronic device 1501, and may identify that the situation of the electronic device 1501 is the first situation, based on the obtained situation information.

In operation 1507, the electronic device 1501 may broadcast a second advertising packet of a second type, having a second period faster than the first period, in response to identifying that the situation of the electronic device 1501 is the first situation.

In operation 1509, the external electronic device 1502 may transmit a connection request signal to the electronic device 1501, in response to reception of the second advertising packet having the second period.

In operation 1511, in response to reception of the connection request signal, the electronic device 1501 may establish a Bluetooth communication connection (or a BLE communication connection) with the external electronic device 1502.

According to various embodiments, if it is identified that the situation of the electronic device is the first situation while transmitting the first advertising packet of the first type, having the first period, the electronic device may transmit the second advertising packet of the second type, having the second period faster than the first period, thereby reducing a time required for the Bluetooth communication connection with the external electronic device.

According to various embodiments, a method of establishing a Bluetooth communication connection of an electronic device may include transmitting a first advertising packet of a first type, having a first period, via a communication circuit of the electronic device, determining a situation of an external electronic device by identifying scan address information included in an additional information request signal in response to reception of the additional information request signal from the external electronic device which has received the first advertising packet, transmitting a second advertising packet of a second type, having a second period faster than the first period, via the communication circuit, based on the situation of the external electronic device, and establishing a Bluetooth communication connection with the external electronic device in response to reception of a connection request signal.

According to various embodiments, the transmitting of the second advertising packet of the second type, having the second period, may include transmitting a second advertising packet of a second type, having a second period, if the situation of the external electronic device is a first situation.

According to various embodiments, the method of establishing the Bluetooth communication connection may further include maintaining the transmitting of the first advertising packet of the first type, having the first period, if the situation of the external electronic device is a second situation.

According to various embodiments, the transmitting of the second advertising packet of the second type, having the second period, may include transmitting the second advertising packet of the second type, having the second period, during a specific time, and stopping transmission of the second advertising packet when the specified time elapses.

According to various embodiments, the method of establishing the Bluetooth communication connection may further include stopping transmission of the second advertising packet of the second type, having the second period, in response to establishing of the Bluetooth communication connection with the external electronic device.

According to various embodiments, the method of establishing the Bluetooth communication connection may further include stopping transmission of the second advertising packet of the second type, having the second period, when a specified time elapses after transmitting the second advertising packet of the second type, having the second period.

According to various embodiments, the method of establishing the Bluetooth communication connection may further include maintaining the transmitting of the first advertising packet of the first type, having the first period, if the situation of the electronic device is the second situation.

According to various embodiments, the first type may include a type in which a signal is broadcast to enable a connection and search of external electronic devices located around the electronic device. The second type may be a type aiming at a connection with a specific external electronic device.

According to various embodiments, a method of establishing a Bluetooth communication connection of an external electronic device may include obtaining situation information of the external electronic device in response to reception of a first advertising packet of a first type, having a first period and transmitted from an electronic device, determining a situation of the external electronic device, based on the situation information of the external electronic device, transmitting an additional information request signal including scan address information associated with the situation of the external electronic device to the electronic device via a communication circuit of the external electronic device, transmitting a connection request signal to the electronic device via the communication circuit in response to reception of a second advertising packet of a second type, having a second period faster than the first period, and establishing a Bluetooth communication connection with the electronic device.

According to various embodiments, the method of establishing the Bluetooth communication connection may further include determining whether to establish the Bluetooth communication connection with the electronic device, based on service information included in the first advertising packet of the first type, having the first period, and obtaining situation information of the external electronic device when the Bluetooth communication connection with the electronic device is established.

According to various embodiments, the determining of the situation of the external electronic device may include determining whether the situation of the external electronic device is a first situation, based on the situation information, and if the situation of the external electronic device is the first situation, transmitting an additional information request signal including scan address information associated with the first situation to the electronic device via the communication circuit, so that the electronic device transmits the second adverting packet of the second type, having the second period.

According to various embodiments, the method of establishing the Bluetooth communication connection may further include, if the situation of the external electronic device is a second situation, transmitting an additional information request signal including scan address information associated with the second situation to the electronic device via the communication circuit, so that the electronic device maintain the transmitting of the first adverting packet of the first type, having the first period.

According to various embodiments, the obtaining of the situation information may include identifying at least one of a BER and/or a PER, a battery residual capacity of the electronic device, and a location of the electronic device.

According to various embodiments, a method of establishing a Bluetooth connection of an electronic device may include transmitting a first advertising packet of a first type, having a first period, via a communication circuit of the electronic device, obtaining situation information of the electronic device while transmitting the first advertising packet of the first type, having the first period, transmitting a second advertising packet of a second type, having a second period faster than the first period, via the communication circuit, based on the situation information, and establishing a Bluetooth communication connection with the external electronic device in response to reception of a connection request signal

According to various embodiments, the transmitting of the second advertising packet of the second type, having the second period, may include determining a situation of the electronic device, and if the situation of the electronic device is a first situation, transmitting the second adverting packet of the second type, having the second period.

According to various embodiments, the method of establishing the Bluetooth communication connection may further include, if the situation of the electronic device is a second situation, maintaining the transmitting of the first advertising packet having the first period.

According to various embodiments, the obtaining of the situation information may include identifying at least one of a BER and/or a PER, a battery residual capacity of the electronic device, and a location of the electronic device.

According to various embodiments, the method of establishing the Bluetooth communication connection may further include stopping transmission of the second advertising packet, when a specified time elapses after transmitting the second advertising packet type, having the second period.

According to various embodiments, the method of establishing the Bluetooth communication connection may further include stopping transmission of the second advertising packet having the second period in response to establishing of the Bluetooth communication connection with the external electronic device.

According to various embodiments, a method of establishing a Bluetooth communication connection of an external electronic device may include receiving a first advertising packet of a first type, having a first period and transmitted from an electronic device, transmitting an additional information request signal to the electronic device via a communication circuit of the external electronic device in response to reception of a second advertising packet of a second type, having a second period faster than the first period, and establishing a Bluetooth communication connection with the electronic device.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101,200) comprising:
a communication circuit (190, 205);
at least one processor (120, 201) electrically connected to the communication circuit (190, 205) ; and
a memory (130, 203) electrically connected to the at least one processor (120, 201), wherein the memory stores instructions, when executed, causing the at least one processor to:
transmit a first advertising packet of a first type having a first period, via the communication circuit (190, 205), wherein the first type includes a type in which a signal is broadcast to enable a connection and search of all external electronic devices located around the electronic device (101, 200);
in response to reception of an additional information request signal from an external electronic device (104) receiving the first advertising packet:
transmit an additional information signal requested in the additional information request signal, and
determine a situation of the external electronic device (104) based on at least one of a bit error rate, BER, and/or a packet error rate, PER, a battery residual capacity of the electronic device, and a location of the electronic device, by identifying scan address information included in the additional information request signal;
transmit, if the situation is a first situation which requires a fast Bluetooth connection wherein the first situation is any one of a situation in which an obstacle is located between the electronic device and the external electronic device, a situation in which a plurality of different external electronic devices for transmitting/receiving a radio signal are located around the external electronic device, or a situation in which a battery residual capacity of the external electronic device is less than or equal to a reference residual capacity, a second advertising packet of a second type having a second period faster than the first period, via the communication circuit (190), based on the situation of the external electronic device (104), wherein the second type is a type to connect with the external electronic device (104); and
establish a Bluetooth communication connection with the external electronic device in response to reception of a connection request signal from the external electronic device (104).

2. The electronic device of claim 1, wherein the instructions cause the at least one processor (120, 201) to transmit the second advertising packet of the second type having the second period, if the situation of the external electronic device (104) is the first situation.

3. The electronic device of claim 1, wherein the instructions cause the at least one processor (120, 201) to maintain the transmitting of the first advertising packet of the first type having the first period, if the situation of the external electronic device (104) is a second situation.

4. The electronic device of claim 1, wherein the instructions cause the at least one processor (120, 201) to:
transmit the second advertising packet of the second type having the second period, during a specific time; and
stop transmission of the second advertising packet when the specified time elapses.

5. The electronic device of claim 1, wherein the instructions cause the at least one processor (120, 201) to stop transmission of the second advertising packet of the second type having the second period in response to establishing of the Bluetooth communication connection with the external electronic device (104).

6. The electronic device of claim 1, wherein the instructions cause the at least one processor (120, 201) to stop transmission of the second advertising packet of the second type having the second period, when a specified time elapses after transmitting the second advertising packet of the second type having the second period.

7. The electronic device of claim 1, wherein the instructions cause the at least one processor (120, 201) to maintain the transmitting of the first advertising packet of the first type having the first period, if the situation of the external electronic device (104) is the second situation.

8. A method performed by an electronic device (101, 200), the method comprising:
transmitting (803) a first advertising packet of a first type having a first time period, via a communication circuit of the electronic device, 205), wherein the first type includes a type in which a signal is broadcast to enable a connection and search of all external electronic devices located around the electronic device (101, 200);
in response to receiving (805) an additional information request signal from an external electronic device receiving the first advertising packet:
transmitting (807) an additional information signal requested in the additional information request signal, and
determining (809) a situation of the external electronic device based on at least one of a bit error rate, BER, and/or a packet error rate, PER, a battery residual capacity of the electronic device, and a location of the electronic device, by identifying scan address information included in the additional information request signal;
transmitting (811), if the situation is a first situation which requires a fast Bluetooth connection, wherein the first situation is any one of a situation in which an obstacle is located between the electronic device and the external electronic device, a situation in which a plurality of different external electronic devices for transmitting/receiving a radio signal are located around the external electronic device, or a situation in which a battery residual capacity of the external electronic device is less than or equal to a reference residual capacity, a second advertising packet of a second type having a second period faster than the first period, via the communication circuit, based on the situation of the external electronic device, wherein the second type is a type to connect with the external electronic device (104); and
establishing (815) a Bluetooth communication connection with the external electronic device in response to reception of a connection request signal (813) from the external electronic device (104).

9. The method of claim 8, further comprising:
transmitting the second advertising packet of the second type having the second period, if the situation of the external electronic device is a first situation.

10. The method of claim 8, further comprising:
maintaining the transmitting of the first advertising packet of the first type having the first period, if the situation of the external electronic device is a second situation.

11. The method of claim 8, further comprising:
transmitting the second advertising packet of the second type having the second period, during a specific time; and
stopping transmission of the second advertising packet when the specified time elapses.

12. The method of claim 8, further comprising:
stopping transmission of the second advertising packet of the second type having the second period in response to establishing of the Bluetooth communication connection with the external electronic device.

13. The method of claim 8, further comprising:
stopping transmission of the second advertising packet of the second type having the second period, when a specified time elapses after transmitting the second advertising packet of the second type having the second period.

14. The method of claim 8, further comprising:
maintaining the transmitting of the first advertising packet of the first type having the first period, if the situation of the external electronic device is the second situation.

## Patentansprüche

1. Elektronische Vorrichtung (101, 200), die Folgendes umfasst:
eine Kommunikationsschaltung (190, 205);
zumindest einen Prozessor (120, 201), der mit der Kommunikationsschaltung (190, 205) elektrisch verbunden ist; und
einen Speicher (130, 203), der mit dem zumindest einen Prozessor (120, 201) elektrisch verbunden ist, wobei in dem Speicher Anweisungen gespeichert sind, die bei Ausführung den zumindest einen Prozessor zu Folgendem veranlassen:
Übertragen eines ersten Ankündigungspakets eines ersten Typs mit einer ersten Periode über die Kommunikationsschaltung (190, 205), wobei der erste Typ einen Typ beinhaltet, bei dem ein Signal ausgestrahlt wird, um eine Verbindung und eine Suche aller externen elektronischen Vorrichtungen zu ermöglichen, die sich um die elektronische Vorrichtung (101, 200) herum befinden;
als Reaktion auf den Empfang eines zusätzlichen Informationsanforderungssignals von einer externen elektronischen Vorrichtung (104), die das erste Ankündigungspaket empfängt:
Übertragen eines zusätzlichen Informationssignals, das in dem zusätzlichen Informationsanforderungssignal angefordert wird, und
Bestimmen einer Situation der externen elektronischen Vorrichtung (104) basierend auf zumindest einem von einer Bitfehlerrate (BER, Bit Error Rate) und/oder einer Paketfehlerrate (PER, Packet Error Rate), einer Batterierestkapazität der elektronischen Vorrichtung und einem Standort der elektronischen Vorrichtung, und zwar durch Identifizieren von Scanadressinformationen, die in dem zusätzlichen Informationsanforderungssignal enthalten sind;
wenn es sich bei der Situation um eine erste Situation handelt, die eine schnelle Bluetooth-Kommunikationsverbindung erforderlich macht, wobei es sich bei der ersten Situation um eine beliebige der folgenden Situationen handelt: eine Situation, in der sich ein Hindernis zwischen der elektronischen Vorrichtung und der externen elektronischen Vorrichtung befindet, eine Situation, in der sich eine Vielzahl verschiedener externer elektronischer Vorrichtungen zum Übertragen/Empfangen eines Funksignals um die externe elektronische Vorrichtung herum befinden, oder eine Situation, in der die Restkapazität der Batterie der externen elektronischen Vorrichtung kleiner oder gleich einer Referenz-Restkapazität ist, Übertragen eines zweiten Ankündigungspakets eines zweiten Typs mit einem zweiten Periode, die schneller ist als die erste Periode, über die Kommunikationsschaltung (190) basierend auf der Situation der externen elektronischen Vorrichtung (104), wobei es sich bei dem zweiten Typ um einen Typ zum Verbinden mit der externen elektronischen Vorrichtung (104) handelt; und
Herstellen einer Bluetooth-Kommunikationsverbindung mit der externen elektronischen Vorrichtung als Reaktion auf den Empfang eines Verbindungsanforderungssignals von der externen elektronischen Vorrichtung (104).

2. Elektronische Vorrichtung nach Anspruch **1,** wobei die Anweisungen den zumindest einen Prozessor (120, 201) veranlassen, das zweite Ankündigungspaket des zweiten Typs mit der zweiten Periode zu übertragen, wenn es sich bei der Situation der externen elektronischen Vorrichtung (104) um die erste Situation handelt.

3. Elektronische Vorrichtung nach Anspruch **1,** wobei die Anweisungen den zumindest einen Prozessor (120, 201) veranlassen, das Übertragen des ersten Ankündigungspakets des ersten Typs mit der ersten Periode aufrechtzuerhalten, wenn es sich bei der Situation der externen elektronischen Vorrichtung (104) um eine zweite Situation handelt.

4. Elektronische Vorrichtung nach Anspruch 1, wobei die Anweisungen den zumindest einen Prozessor (120, 201) zu Folgendem veranlassen:
Übertragen des zweiten Ankündigungspakets des zweiten Typs mit der zweiten Periode während einer festgelegten Zeit; und
Beenden der Übertragung des zweiten Ankündigungspakets, wenn die festgelegte Zeit verstrichen ist.

5. Elektronische Vorrichtung nach Anspruch 1, wobei die Anweisungen den zumindest einen Prozessor (120, 201) veranlassen, die Übertragung des zweiten Ankündigungspakets des zweiten Typs mit der zweiten Periode zu beenden als Reaktion auf die Herstellung der Bluetooth-Kommunikationsverbindung mit der externen elektronischen Vorrichtung (104).

6. Elektronische Vorrichtung nach Anspruch 1, wobei die Anweisungen den zumindest einen Prozessor (120, 201) veranlassen, die Übertragung des zweiten Ankündigungspakets des zweiten Typs mit der zweiten Periode zu beenden, wenn eine festgelegte Zeit nach der Übertragung des zweiten Ankündigungspakets des zweiten Typs mit der zweiten Periode verstrichen ist.

7. Elektronische Vorrichtung nach Anspruch 1, wobei die Anweisungen den zumindest einen Prozessor (120, 201) veranlassen, das Übertragen des ersten Ankündigungspakets des ersten Typs mit der ersten Periode aufrechtzuerhalten, wenn es sich bei der Situation der externen elektronischen Vorrichtung (104) um die zweite Situation handelt.

8. Durch eine elektronische Vorrichtung (101, 200) durchgeführtes Verfahren, wobei das Verfahren Folgendes umfasst:
Übertragen (803) eines ersten Ankündigungspakets eines ersten Typs mit einer ersten Periode über eine Kommunikationsschaltung der elektronischen Vorrichtung, 205), wobei der erste Typ einen Typ beinhaltet, bei dem ein Signal ausgestrahlt wird, um eine Verbindung und eine Suche aller externen elektronischen Vorrichtungen zu ermöglichen, die sich um die elektronische Vorrichtung (101, 200) herum befinden;
als Reaktion auf den Empfang (805) eines zusätzlichen Informationsanforderungssignals von einer externen elektronischen Vorrichtung, die das erste Ankündigungspaket empfängt:
Übertragen (807) eines zusätzlichen Informationssignals, das in dem zusätzlichen Informationsanforderungssignal angefordert wird, und
Bestimmen (809) einer Situation der externen elektronischen Vorrichtung basierend auf zumindest einem von einer Bitfehlerrate (BER, Bit Error Rate) und/oder einer Paketfehlerrate (PER, Packet Error Rate), einer Batterierestkapazität der elektronischen Vorrichtung und einem Standort der elektronischen Vorrichtung, und zwar durch Identifizieren von Scanadressinformationen, die in dem zusätzlichen Informationsanforderungssignal enthalten sind;
wenn es sich bei der Situation um eine erste Situation handelt, die eine schnelle Bluetooth-Kommunikationsverbindung erforderlich macht, wobei es sich bei der ersten Situation um eine beliebige der folgenden Situationen handelt: eine Situation, in der sich ein Hindernis zwischen der elektronischen Vorrichtung und der externen elektronischen Vorrichtung befindet, eine Situation, in der sich eine Vielzahl verschiedener externer elektronischer Vorrichtungen zum Übertragen/Empfangen eines Funksignals um die externe elektronische Vorrichtung herum befinden, oder eine Situation, in der die Restkapazität der Batterie der externen elektronischen Vorrichtung kleiner oder gleich einer Referenz-Restkapazität ist, Übertragen (811) eines zweiten Ankündigungspakets eines zweiten Typs mit einer zweiten Periode, die schneller ist als die erste Periode, über die Kommunikationsschaltung basierend auf der Situation der externen elektronischen Vorrichtung (104); und
Herstellen (815) einer Bluetooth-Kommunikationsverbindung mit der externen elektronischen Vorrichtung als Reaktion auf den Empfang eines Verbindungsanforderungssignals (813) von der externen elektronischen Vorrichtung (104).

9. Verfahren nach Anspruch 8, das ferner Folgendes umfasst:
Übertragen des zweiten Ankündigungspakets des zweiten Typs mit der zweiten Periode, wenn es sich bei der Situation der externen elektronischen Vorrichtung um eine erste Situation handelt.

10. Verfahren nach Anspruch 8, das ferner Folgendes umfasst:
Aufrechterhalten der Übertragung des ersten Ankündigungspakets des ersten Typs mit der ersten Periode, wenn es sich bei der Situation der externen elektronischen Vorrichtung um eine zweite Situation handelt.

11. Verfahren nach Anspruch 8, das ferner Folgendes umfasst:
Übertragen des zweiten Ankündigungspakets des zweiten Typs mit der zweiten Periode während einer festgelegten Zeit; und
Beenden der Übertragung des zweiten Ankündigungspakets, wenn die festgelegte Zeit verstrichen ist.

12. Verfahren nach Anspruch 8, das ferner Folgendes umfasst:
Beenden der Übertragung des zweiten Ankündigungspakets des zweiten Typs mit der zweiten Periode als Reaktion auf das Herstellen der Bluetooth-Kommunikationsverbindung zu der externen elektronischen Vorrichtung.

13. Verfahren nach Anspruch 8, das ferner Folgendes umfasst:
Beenden der Übertragung des zweiten Ankündigungspakets des zweiten Typs mit der zweiten Periode, wenn eine festgelegte Zeit nach der Übertragung des zweiten Ankündigungspakets des zweiten Typs mit der zweiten Periode verstrichen ist.

14. Verfahren nach Anspruch 8, das ferner Folgendes umfasst:
Aufrechterhalten der Übertragung des ersten Ankündigungspakets des ersten Typs mit der ersten Periode, wenn es sich bei der Situation der externen elektronischen Vorrichtung um die zweite Situation handelt.

## Revendications

1. Appareil électronique (101, 200) comprenant :
un circuit de communication (190, 205),
au moins un processeur (120, 201) relié électriquement au circuit de communication (190, 205), et une mémoire (130, 203) reliée électriquement à l'au moins un processeur (120, 201), ladite mémoire contenant des instructions qui, lorsqu'elles sont exécutées, amènent l'au moins un processeur à :
émettre un premier paquet d'annonce d'un premier type ayant une première période, par le biais du circuit de communication (190, 205), ledit premier type comprenant un type dans lequel un signal est diffusé pour permettre une connexion et une recherche de tous les appareils électroniques externes situés autour de l'appareil électronique (101, 200) ;
en réaction à la réception d'un signal de demande d'informations supplémentaires provenant d'un appareil électronique externe (104) recevant le premier paquet d'annonce :
émettre un signal d'informations supplémentaires demandé dans le signal de demande d'informations supplémentaires, et
déterminer une situation de l'appareil électronique externe (104) en fonction d'au moins un des éléments suivants : taux d'erreur binaire (BER, bit error rate) et/ou taux d'erreur de paquet (PER, packet error rate), capacité résiduelle de la batterie de l'appareil électronique et emplacement du dispositif électronique, en identifiant des informations d'adresse de balayage incluses dans le signal de demande d'informations supplémentaires ;
si la situation est une première situation nécessitant une connexion Bluetooth rapide, ladite première situation correspondant à l'une des situations suivantes : présence d'un obstacle entre l'appareil électronique et l'appareil électronique externe, présence d'une pluralité d'appareils électroniques externes différents pour l'émission/la réception d'un signal radio autour de l'appareil électronique externe, et capacité résiduelle de la batterie de l'appareil électronique externe inférieure ou égale à une capacité résiduelle de référence, émettre un deuxième paquet d'annonce d'un deuxième type ayant une deuxième période plus rapide que la première période, par le biais du circuit de communication (190), en fonction de la situation de l'appareil électronique externe (104), ledit deuxième type étant un type permettant une connexion avec l'appareil électronique externe (104) ; et
établir une connexion de communication Bluetooth avec l'appareil électronique externe en réaction à la réception d'un signal de demande de connexion provenant de l'appareil électronique externe (104).

2. Appareil électronique selon la revendication 1, dans lequel les instructions amènent l'au moins un processeur (120, 201) à émettre le deuxième paquet d'annonce du deuxième type ayant la deuxième période, si la situation de l'appareil électronique externe (104) est la première situation.

3. Appareil électronique selon la revendication 1, dans lequel les instructions amènent l'au moins un processeur (120, 201) à maintenir l'émission du premier paquet d'annonce du premier type ayant la première période, si la situation de l'appareil électronique externe (104) est une deuxième situation.

4. Appareil électronique selon la revendication 1, dans lequel les instructions amènent l'au moins un processeur (120, 201) à :
émettre le deuxième paquet d'annonce du deuxième type ayant la deuxième période, pendant une durée spécifique, et
arrêter l'émission du deuxième paquet d'annonce lorsque la durée spécifiée s'est écoulée.

5. Appareil électronique selon la revendication 1, dans lequel les instructions amènent l'au moins un processeur (120, 201) à arrêter l'émission du deuxième paquet d'annonce du deuxième type ayant la deuxième période en réaction à l'établissement de la connexion de communication Bluetooth avec l'appareil électronique externe (104).

6. Appareil électronique selon la revendication 1, dans lequel les instructions amènent l'au moins un processeur (120, 201) à arrêter l'émission du deuxième paquet d'annonce du deuxième type ayant la deuxième période lorsqu'une durée spécifiée s'est écoulée après l'émission du deuxième paquet d'annonce du deuxième type ayant la deuxième période.

7. Appareil électronique selon la revendication 1, dans lequel les instructions amènent l'au moins un processeur (120, 201) à maintenir l'émission du premier paquet d'annonce du premier type ayant la première période si la situation de l'appareil électronique externe (104) est la deuxième situation.

8. Procédé mis en œuvre par un appareil électronique (101, 200), le procédé comprenant :
l'émission (803) d'un premier paquet d'annonce d'un premier type ayant une première période, par le biais d'un circuit de communication de l'appareil électronique, 205), ledit premier type comprenant un type dans lequel un signal est diffusé pour permettre une connexion et une recherche de tous les appareils électroniques externes situés autour de l'appareil électronique (101, 200) ;
en réaction à la réception (805) d'un signal de demande d'informations supplémentaires provenant d'un appareil électronique externe recevant le premier paquet d'annonce :
l'émission (807) d'un signal d'informations supplémentaires demandé dans le signal de demande d'informations supplémentaires, et
la détermination (809) d'une situation de l'appareil électronique externe en fonction d'au moins un des éléments suivants : taux d'erreur binaire (BER, bit error rate) et/ou taux d'erreur de paquet (PER, packet error rate), capacité résiduelle de la batterie de l'appareil électronique et emplacement du dispositif électronique, par identification d'informations d'adresse de balayage incluses dans le signal de demande d'informations supplémentaires ;
si la situation est une première situation nécessitant une connexion Bluetooth rapide, ladite première situation correspondant à l'une des situations suivantes : présence d'un obstacle entre l'appareil électronique et l'appareil électronique externe, présence d'une pluralité d'appareils électroniques externes différents pour l'émission/la réception d'un signal radio autour de l'appareil électronique externe, et capacité résiduelle de la batterie de l'appareil électronique externe inférieure ou égale à une capacité résiduelle de référence, l'émission (811) d'un deuxième paquet d'annonce d'un deuxième type ayant une deuxième période plus rapide que la première période, par le biais du circuit de communication, en fonction de la situation de l'appareil électronique externe, ledit deuxième type étant un type permettant une connexion avec l'appareil électronique externe (104) ; et
l'établissement (815) d'une connexion de communication Bluetooth avec l'appareil électronique externe en réaction à la réception d'un signal de demande de connexion (813) provenant de l'appareil électronique externe (104).

9. Procédé selon la revendication 8, comprenant en outre :
l'émission du deuxième paquet d'annonce du deuxième type ayant la deuxième période, si la situation de l'appareil électronique externe est une première situation.

10. Procédé selon la revendication 8, comprenant en outre :
le maintien de l'émission du premier paquet d'annonce du premier type ayant la première période, si la situation de l'appareil électronique externe est une deuxième situation.

11. Procédé selon la revendication 8, comprenant en outre :
l'émission du deuxième paquet d'annonce du deuxième type ayant la deuxième période, pendant une durée spécifique, et
l'arrêt de l'émission du deuxième paquet d'annonce lorsque la durée spécifiée s'est écoulée.

12. Procédé selon la revendication 8, comprenant en outre :
l'arrêt de l'émission du deuxième paquet d'annonce du deuxième type ayant la deuxième période en réaction à l'établissement de la connexion de communication Bluetooth avec l'appareil électronique externe.

13. Procédé selon la revendication 8, comprenant en outre :
l'arrêt de l'émission du deuxième paquet d'annonce du deuxième type ayant la deuxième période, lorsqu'une durée spécifiée s'est écoulée après l'émission du deuxième paquet d'annonce du deuxième type ayant la deuxième période.

14. Procédé selon la revendication 8, comprenant en outre :
le maintien de l'émission du premier paquet d'annonce du premier type ayant la première période, si la situation de l'appareil électronique externe est la deuxième situation.
